# EUROPÄISCHE PATENTSCHRIFT

(11) **EP 3 052 822 B1**
(45) Veröffentlichungstag und Bekanntmachung des Hinweises auf die Patenterteilung: **27.09.2017**
(21) Anmeldenummer: 14752638.8
(22) Anmeldetag: 19.08.2014
(51) Int. Cl.: F16C 11/06

(54) **KUGELGELENK MIT BELASTUNGSOPTIMIERTER KUGELSCHALE**
BALL JOINT WITH A LOADING-OPTIMIZED BALL SHELL
ARTICULATION SPHÉRIQUE POURVUE D'UN COUSSINET SPHÉRIQUE PRÉSENTANT UNE OPTIMISATION DES CONTRAINTES

(30) Priorität: 02.10.2013 DE 102013220038
(43) Veröffentlichungstag der Anmeldung: 10.08.2016
(73) Patentinhaber: ZF Friedrichshafen AG, 88046 Friedrichshafen (DE)
(72) Erfinder: GRÄBER, Jürgen, 32351 Stemwede (DE); RECHTIEN, Martin, 49434 Neuenkirchen (DE)
(86) Internationale Anmeldenummer: PCT/EP2014/067626
(87) Internationale Veröffentlichungsnummer: WO 2015/049077

(56) Entgegenhaltungen:
- EP-A2- 0 922 868
- DE-A1- 3 843 331
- FR-A- 1 089 843
- FR-A1- 2 543 633
- US-A- 1 809 703
- US-A- 4 722 631

## Beschreibung

Die vorliegende Erfindung betrifft ein Kugelgelenk gemäß der im Oberbegriff des Patentanspruchs 1 näher definierten Art. Des Weiteren betrifft die Erfindung ein Verfahren zur Herstellung eines Kugelgelenks.

Aus dem Stand der Technik bekannte Kugelgelenke umfassen ein Gehäuse, in dessen Inneren eine Kugel angeordnet ist. Die Kugel ist Teil eines Kugelzapfens, der aus einer Öffnung des Gehäuses nach außen ragt. Zwischen der Kugel und dem Gehäuse befindet sich eine Kugelschale, deren Dicke auf einem Umlauf um die gemeinsame Achse eine konstante Dicke aufweist. Wenn diese Kugelschale radial belastet wird, ergibt sich mit zunehmender Belastung des Zapfens bzw. der Kugel eine radiale Verschiebung der Kugel relativ zum Gehäuse. Diese Verschiebung erfolgt parallel zur Kraftrichtung und führt zu einer Stauchung der Kugelschale, die in Kraftrichtung maximal ist. In Querrichtung zur Kraft wird die Kugelschale nicht gestaucht und damit nicht belastet, weil hier die Verschiebung der Kugel parallel zur Oberfläche der Kugelschale erfolgt. Entlang des Umfangs bzw. Äquators der Kugel ändert sich die Stauchung und damit die Belastung der Kugelschale gemäß dem Vektoranteil der Oberflächennormalen zur Kraftrichtung. Die Kugelschale ist infolgedessen sehr inhomogen belastet, so dass insbesondere bei hohen Belastungen eine Überbelastung der Kugelschale in den höher belasteten Bereichen auftreten kann. Hierdurch kann eine dauerhafte Beschädigung des Kugelgelenks verursacht werden.

Die maximale Belastbarkeit von Kugelgelenken kann erhöht werden, wenn die Belastung gleichmäßiger auf alle Bereiche verteilt wird, so dass die Belastung über einen möglichst breiten Winkelbereich zwischen radialer Kraftrichtung - und den beiden orthogonal dazu verlaufenden Querrichtungen (Quer- und Hochachse) homogen verteilt ist. Die Hochachse entspricht dabei der Längsachse des Gelenkgehäuses.
Für die parallel zur Längsachse gerichtete Hochachse, ist bekannt, dass die Dicke der Kugelschale nicht konstant ist, sondern entsprechend der unterschiedlichen Gehäuseinnenkonturen (zylindrische oder teilweise spärische Konturen, Konturen mit einer Schräge oder Doppelschräge) zum Pol der Kugel hin ansteigende oder variable Wanddicken aufweist. Mit anderen Worten ist die Dicke der Kugelschale in Richtung der Hochachse variabel.
Für die Querachse, die parallel zur Äquatorebene verläuft, weist die Wanddicke der Kugelschale nach dem Stand der Technik immer eine konstante Wanddicke auf, weil die Gehäuseöffnungen z.B. durch Bohren erzeugt werden und zur Hochachse radialsymmetrisch ausgebildet sind. Aus US 4 722 631 A ist ein Kugelgelenk mit einer in einer Lastrichtung dickeren Kugelschale bekannt. Das Kugelgelenk aus US 4 722 631 A weist die Merkmale des Oberbegriffs des Anspruchs 1 auf.

Aus FR 1 089 843 A ist ein Kugelgelenk mit einer mittels Vulkanisation hergestellten Gummikalotte bekannt. Die Gummikalotte ist hierdurch mit dem Kugelkopf fest verbunden. Infolgedessen ist keine Kugelschale gezeigt, die den Kugelkopf gleitbeweglich aufnimmt. Im Übrigen weist das aus FR 1 089 843 A bekannte Kugelgelenk die Merkmale des Oberbegriffs des Anspruchs 1 auf. DE3312090 A beschäftigt sich mit dem Problem, eine gleichmäßige Lastverteilung im Material einer Gelenkzwischenhülse zu erreichen. Die aus DE3312090 A bekannte Zwischenhülse weist in einem Bereich beiderseits einer Mittelebene des Innenteils, die durch die Hauptbelastungsrichtung gelegt ist, parallel zu dieser Mittelebene eine gleichbleibende Materialdicke auf.

Es ist eine Aufgabe der Erfindung die Belastbarkeit von Kugelgelenken zu erhöhen und diese kostengünstiger herzustellen. Dabei soll zur Vermeidung einer lokalen Überbelastung der Kugelschale insbesondere gewährleistet sein, dass sich eine koaxial zur Hauptbelastungsachse einwirkende Kraft auf die Kugelschale in Umfangsrichtung über einen Winkelbereich gleichmäßig verteilt.

Die Aufgabe wird durch die Merkmale des Patentanspruchs 1 sowie der Merkmale des Verfahrensanspruchs 9 gelöst. Weitere vorteilhafte Ausgestaltungen ergeben sich aus den Unteransprüchen und den Zeichnungen.

Es wird ein Kugelgelenk, insbesondere für ein Fahrwerksbauteil einer Radaufhängung eines Kraftfahrzeugs, vorgeschlagen, wobei das Kugelgelenk ein Gehäuse, eine im Innenraum des Gehäuses angeordnete Gelenkkugel und eine zwischen diesen beiden angeordnete Kugelschale aufweist. Die Gelenkkugel ist vorzugsweise Teil eines Kugelzapfens. Der Kugelzapfen ist hierbei in einem Anschlussbereich mit der Kugel, insbesondere einteilig, verbunden. Die Kugelschale liegt an ihrer Außenfläche an der Gehäuseinnenfläche und an ihrer Innenfläche an der Kugeloberfläche an. Infolgedessen ist die Innenfläche der Kugelschale vorzugsweise als Negativform der Kugeloberfläche ausgebildet. Die Kugelschale nimmt die Gelenkkugel gleitbeweglich auf. Des Weiteren ist die Kugelschale derart elastisch ausgebildet, dass sich die Gelenkkugel bei einer auf das Kugelgelenk einwirkenden Kraft gegenüber dem Gehäuse verschieben kann. Hierfür ist die Kugelschale vorzugsweise aus einem Kunststoff ausgebildet.

Erfindungsgemäß weist die Kugelschale in einer durch den Kugelmittelpunkt verlaufenden Querschnittsebene eine kreisrunde Innenkontur und eine derart ausgebildete Au-βenkontur auf. Um die Belastungskraft gleichmäßig auf einen größeren Bereich bzw. auf eine größere Oberfläche der Kugelschale verteilen zu können, ist die Kugelschale im Querschnitt im Bereich der Hauptbelastungsachse dicker, insbesondere doppelt so dick, ausgebildet als im Bereich der Querachse, wobei die Querachse die Außenkontur in ein erstes und zweites Teilsegment unterteilt.
Eine sehr gute Kraftverteilung wird erzeugt, indem erfindungsgemäß die Außenkontur der Kugelschale in zumindest einem ihrer beiden Teilsegmente aus einem ersten und einem zweiten Teilkreis gebildet ist, die sich, vorzugsweise im Bereich des jeweiligen Endes des Winkelbereiches, in zwei zur Hauptbelastungsachse symmetrischen Schnittpunkten schneiden. So kann hierdurch vorteilhafterweise der erste Teilkreis optimal zur Verteilung der einwirkenden Kraft ausgelegt werden. Der zweite Teilkreis kann hingegen derart dimensioniert werden, dass die Kugelschale in demjenigen Bereich, in dem sie durch die Kraft in Hauptbelastungsrichtung nicht nennenswert gestaucht wird, eine endliche Dicke aufweist, wodurch wiederum oben genannte Toleranz- und Fertigungsprobleme vermieden werden können. Mit anderen Worten wird in dem Hauptbelastungsbereich ein erstes Teilsegment der Außenkontur der Kugelschale durch Verschiebung der Innenkontur in Kraftrichtung erzeugt. Damit ist die in Kraftrichtung projizierte Dicke der Kugelschale in diesem Teilsegment überall gleich. Außerhalb des Hauptbelastungsbereichs wird die Kugelschale nur geringfügig gestaucht und weist deshalb in ihrem zweiten Teilsegment eine endliche Dicke auf, wodurch wiederum Toleranz- und Herstellungsprobleme vermieden werden können.

Für eine gute Lastverteilung ist erfindungsgemäß der Mittelpunkt des ersten Teilkreises zum Kugelmittelpunkt exzentrisch, auf der Hauptbelastungsachse liegend und innerhalb des Teilsegmentes angeordnet. Zusätzlich entspricht der Radius des ersten Teilkreises dem Kugelradius.
Zudem ist erfindungsgemäß der Mittelpunkt des zweiten Teilkreises zum Kugelmittelpunkt konzentrisch angeordnet, wobei der Radius des zweiten Teilkreises größer als der Kugelradius ausgebildet ist. Hierdurch weist die Kugelschale auch in denjenigen Bereichen, in denen sie nicht bzw. nur geringfügig gestaucht wird, eine ausreichende Dicke auf, wodurch Toleranz- und Herstellungsprobleme vermieden werden können.

Die Kugelschale weist erfindungsgemäß zumindest in der durch den Kugelmittelpunkt ausgebildeten" Querschnittsebene eine sich in Umfangsrichtung verändernde radiale Dicke auf. Die radiale Dicke der Kugelschale ist derart variabel ausgebildet, dass sich eine koaxial zur Haupbelastungsrichtung einwirkende Kraft in Umfangsrichtung über einen Winkelbereich gleichmäßig und besser, zumindest in einem hauptsächlich belasteten Bereich, auf die gesamte Kugelschale verteilt als bei einer Kugelschale mit umlaufend konstanter radialer Dicke.

Durch die in Umfangsrichtung variable Kugelschalendicke kann vorteilhafterweise die im Wesentlichen punktuell bzw. lokal angreifende Kraft auf einen größeren Flächenbereich der Kugelschale verteilt werden. Hierdurch kann eine gleichmäßigere Belastung der Kugelschale bewirkt werden, so dass insgesamt gesehen eine höhere maximale Belastbarkeit des Kugelgelenks bewirkt werden kann. Somit kann die Belastbarkeit eines derart ausgebildeten Kugelgelenks im Vergleich zu bekannten Kugelgelenken bei gleicher Nenngröße der Kugel um etwa 20 - 30 % erhöht werden. Des Weiteren kann die Baugröße eines Kugelgelenks reduziert werden, da diese nun zur Aufnahme der gleichen Kraft weniger stark dimensioniert sein muss. Infolgedessen können diese Kugelgelenke günstiger hergestellt werden. Auch kann durch eine derartige variable radiale Dicke der Kugelschale die Lebensdauer von Kugelgelenken erhöht werden.

Das Kugelgelenk weist eine Hauptbeiastungsachse und eine zu dieser orthogonal ausgerichteten Querachse auf. Je nach Art des Kugelgelenks, z.B. radial belastetes Winkelgelenk oder Traggelenk, ist die Hauptbelastungsachse unterschiedlich orientiert. So ist die Hauptbelastungsachse definitionsgemäß diejenige Achse des Kugelgelenks, in deren Richtung die Kraft, insbesondere die größte auftretende Kraft, wirkt.

Eine sehr gute Kraftverteilung sowie optimale Auslegung der Kugelschale kann bewirkt werden, wenn die radiale Dicke der Kugelschale in Umfangsrichtung von der Hauptbelastungsachse ausgehend in Richtung zur Querachse zumindest in einem Winkelbereich abnimmt. Vorzugsweise nimmt die radiale Dicke der Kugelschale von der Hauptbelastungsachse ausgehend jeweils in Richtung zur Querachse im Wesentlichen stetig oder kontinuierlich ab. Entsprechend dem Winkel zwischen Belastungsrichtung und lokalem Normalenvektor der Oberfläche ist ein Cosinus-förmiges Dickenprofil mit Maximum in Kraftrichtung (Hauptbelastungsrichtung) und Minimum in Querrichtung ideal. Damit ist gemeint, dass die Dicke oder mit anderen Worten die Materialstärke vom größten zum geringsten Querschnitt Cosinus-förmig abnimmt.

Eine unendliche dünne Lagerschale entspräche keiner Lagerschale, was zu tribologischen Nachteilen führt (z.B. Verklemmen der Kugel im Gehäuse). Eine in Querrichtung beliebig dünne Wandstärke kann die aufgrund von Toleranzlagen (Toleranzen, die der Fertigung von Kugel und Gehäuse zuzurechnen sind) von Kugel und Gehäuse unterschiedliche Überdeckung (Verklemmung oder Spiel) nicht mehr ausgleichen und kann die metallischen Oberflächen tribologisch nicht voneinander trennen. Weil eine beliebig dünne Lagerschale nicht herstellbar ist und letztendlich die Flächenanteile der Kugelschale in der Nähe der Querrichtung keine nennenswerten Kraftanteile aufnehmen, ist für das Dickenprofil in Querrichtung eine Abweichung vom Cosinusprofil und damit eine endliche Dicke vorteilhaft.

Vorteilhaft ist es, wenn der Winkelbereich, von der Kraftrichtung bzw. Hauptbelastungsachse bis zur Querrichtung zwischen 30°und 80°, vorzugsweise 60°, beträgt. In diesem Winkelbereich kann zu beiden Seiten der Hauptbelastungsachse eine sehr gute Verteilung der einwirkenden Kraft bewirkt werden, wenn die radiale Dicke der Kugelschale in diesem Bereich in Richtung der Querachse abnimmt.

Um die Herstellungskosten der Gehäusekontur und letztlich des Kugelgelenks zu reduzieren, ist es vorteilhaft, wenn die durch die beiden Teilkreise gebildete idealisierte Kugelschale durch eine an diese angenäherte, jedoch leichter zu fertigende, Form ausgebildet ist. Dazu werden vorzugsweise im Übergangspunkt der beiden Teilsegmente bzw. Teilkreise die beiden Konturen angenähert, so dass diese vorzugsweise tangential ineinander übergehen. Aus dieser Vorgehensweise ergibt sich, dass die in Hauptbelastungsrichtung bzw. Kraftrichtung projizierte bzw. erzeugte Dicke im Hauptbelastungsbereich je nach Winkelbereich in etwa das 1- bis 3-fache der radialen Dicke außerhalb des Hauptbelastungsbereichs beträgt.

Diesbezüglich ist es somit vorteilhaft, wenn die Außenkontur der Kugelschale in zumindest einem ihrer beiden Teilsegmente zumindest als Teil einer(s), insbesondere zum Kugelgelenkmittelpunkt konzentrischen, Ellipse oder Ovals ausgebildet ist. Hierbei bildet vorzugsweise die Hauptbelastungsachse die Hauptachse der Ellipse oder des Ovals. Derartige zumindest teilweise ellipsen- oder oval-förmigen Konturen können sehr genau und kostengünstig mit bekannten Fertigungsverfahren ausgebildet werden (z.B. CNC-Frästechnik).

Vorteilhaft ist es ferner, wenn die Außenkontur der Kugelschale als vollständige Ellipse oder ellipsenähnliche Kontur, insbesondere sich über beide Teilsegmente erstreckend, ausgebildet ist. Hierdurch kann ein einfach zu konstruierendes Dickenprofil der Kugelschale erzeugt werden, dass die im Wesentlichen punktuell bzw. lokal angreifende Kraft sehr gut auf eine ausreichend große Fläche der Kugelschale im Bereich der Hauptbelastungsachse zu verteilen vermag.

Bei dreidimensionaler Betrachtung der Kugelschale ist es vorteilhaft, wenn diese nicht nur im Querschnitt sondern auch in Richtung der Hoch- bzw. Längsachse als zumindest Teil eines Ellipsoids, eines Zylinders mit elliptischer Grundfläche oder eines Ovoides ausgebildet ist. Hierdurch kann die einwirkende Kraft nicht nur zweidimensional in Umfangsrichtung verteilt werden, sondern dreidimensional über eine Teilfläche des entsprechenden vorstehend genannten dreidimensionalen Körpers. Infolgedessen kann das Kugelgelenk noch höhere Belastungen aufnehmen. Da die Herstellung bzw. die Montage einer solchen Kugelschale aufwendiger werden, wenn entsprechende Gehäusekonturen in beiden Achsrichtungen umgesetzt werden, ist abzuwägen, ob obige Konturen nur in einer Achsrichtung z.B. zum Gehäuseboden genutzt werden und in die in Richtung der Hochachse, die Konturen parallel zur dieser Achsrichtung z.B. als Prisma mit elliptischer Grundfläche ausgeformt wird.

Vorteilhaft ist es, wenn die Gehäuseinnenkontur und/oder die Gehäuseinnenfläche der Negativform der Außenkontur und/oder der Außenfläche der Kugelschale entspricht. Hierdurch kann ein bündiges Anliegen der Kugelschale an der Gehäuseinnenkontur und/oder der Gehäuseinnenfläche sichergestellt werden, wodurch die ansonsten punktuell bzw. lokal angreifende Kraft auf einen größeren Bereich der Kugelschale verteilt werden kann. Die vorstehend verwendete Begrifflichkeit "Kontur" beschreibt eine sich zweidimensional, insbesondere in der Schnittansicht der Kugelschale, erstreckende Form, wohingegen die Begrifflichkeit "Fläche" eine sich dreidimensionale erstreckende Form beschreibt.

Vorteilhaft ist es, wenn die Dicke der Kugelschale zwischen einem Bereich von 1 mm bis - 3 mm variiert. Aufgrund dieser geringen Unterschiede können vorteilhafterweise weiterhin kreisrunde Deckel bzw. Verschlussringe eingesetzt werden. Das Verhältnis der kleinsten zur größten Wandstärke (Dicke) der Kugelschale beträgt somit etwa 1:3.

Um Wärmeausdehnungen des Kugelgelenks kompensieren zu können, ist es vorteilhaft, wenn die Kugelschale einen oder mehrere Schlitze aufweist, die in Umfangsrichtung der Kugel voneinander beabstandet sind. Es versteht sich, dass die Schlitze sich im Wesentlichen nicht in Hauptbelastungsrichtung erstrecken. Da die Kugelschale in Querrichtung kaum belastet wird und eigentlich beliebig dünn sein kann, ist es vorteilhaft, die Schlitze in Querrichtung zu positionieren. Durch die Schlitze kann ein Verklemmen der Gelenkkugel durch die Kugelschale vermieden werden, da sich die Kugelschale aufgrund der Schlitze in einem gewissen Toleranzbereich bei Erwärmung in Umfangsrichtung ausdehnen kann.

Die Erfindung betrifft des Weiteren ein Verfahren zu Herstellung eines Gehäuses für ein zuvor genanntes Kugelgelenk. Dabei ist eine von einer kreisrunden Innenkontur abweichende, insbesondere elliptische bzw. ovale Innenkontur bevorzugt, so dass eine in Hauptbelastungsrichtung verstärkte Kugelschale mit elliptischer bzw. ovaler Außenkontur aufgenommen werden kann. Das Gehäuse wird bevorzugt mittels Kaltumformung erstellt. Insbesondere wird das Gehäuse ohne spanende Bearbeitung oder Nachbearbeitung der Innenkontur erstellt. Die passgenaue Innenkontur wird in einem oder wenigen Umformvorgängen, insbesondere in einem finalen Umformvorgang, erstellt. Beim letzten oder einzigen Umformvorgang wird die Innenkontur kalibriert (auf Endmaß gebracht). Damit ist eine besonders kostengünstige Herstellung eines Gehäuses bzw. letztlich des gesamten Kugelgelenks ermöglicht. Alternativ kann die Innenkontur mittels spanender Bearbeitung z.B. mittels NC-Frästechnik hergestellt werden.

Bevorzugt wird das Kugelgelenk mit seiner speziellen Gehäuseinnenkontur als Winkel-, Radial-, Trag- oder Hülsengelenk erstellt. Das Kugelgelenk wird in seinen verschiedenen Ausbildungen in Fahrwerksbauteilen wie z.B. Zweipunktlenkern, Mehrpunktlenkern oder dergleichen verwendet.

Hinsichtlich des Kaltumformverfahrens ist es vorteilhaft, wenn das Kugelgelenk als ein Einpressgelenk, insbesondere als Hülsengelenk, gefertigt ist, wobei das Gehäuse eine zylinderförmige Außenfläche aufweist, an der eine Nut oder Abflachung (z.B. Schlüsselfläche) zur Einbauorientierung ausgebildet ist. Gehäuse von Hülsengelenken lassen sich aufgrund ihrer symmetrischen Ausbildung besonders günstig im Kaltumformverfahren herstellen.

Ein Kugelgelenk weist eine Polachse und einen Äquator auf. Hierbei erstreckt sich definitionsgemäß die Polachse zwischen den beiden voneinander beabstandeten Polen der Gelenkkugel, wobei einer dieser beiden Pole im Verbindungsbereich mit dem Kugelzapfen angeordnet ist. Der Äquator erstreckt sich zur Polachse konzentrisch und orthogonal ausgerichtet in der Mittelebene der Gelenkkugel. Die Orientierung der Polachse und des Äquators entspricht dem nicht ausgelenkten Zustand des Kugelgelenks.

Vorteilhaft ist es wenn das Kugelgelenk als radial belastetes, z.B. Winkel- oder Führungsgelenk ausgebildet ist, wobei in diesem Anwendungsfall eine zur Polachse quer, insbesondere orthogonal ausgerichtete Hauptbelastungsachse in der Äquatorebene liegt. Zusätzlich oder alternativ ist es ferner vorteilhaft, wenn das Kugelgelenk als Traggelenk ausgebildet ist, wobei hier die Hauptbelastungsachse zwischen Pol- und Äquatorebene liegt.

Nachfolgend ist die Erfindung anhand von Zeichnungen näher erläutert. Es zeigen:
Figur 1 ein Kugelgelenk in teilgeschnittener Ansicht,
Figur 2 ein Kugelgelenk gemäß Figur 1 im Schnitt entlang der Schnittlinie II-II,
Figur 3 eine spezielle Teilansicht Kugelschale in im Schnitt gemäß der Schnittlinie III-III.

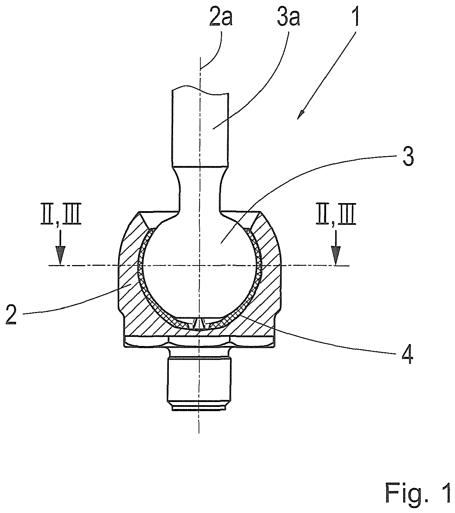

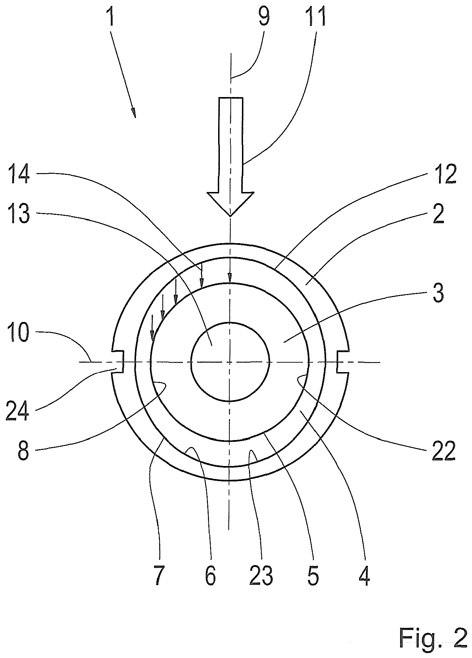

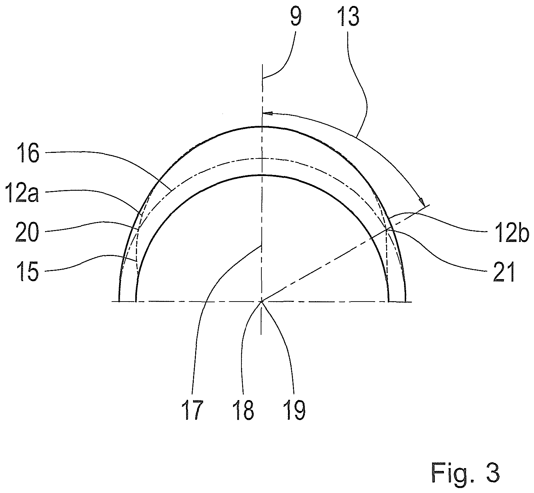

Figur 1 zeigt ein Kugelgelenk 1 in teilgeschnittener Ansicht mit einem Gehäuse 2 und einer an einem Kugelzapfen 3a endseitig angeordneten Kugel 2. Zwischen der Kugel 3 und dem Gehäuse 2 ist eine Kugelschale 4 vorgesehen. Das Kugelgelenk 1 ist in nicht ausgelenkter Darstellung gezeigt. Die Längsachse 2a des Gehäuses 2 liegt auf der Längs- und Symmetrieachse des Kugelzapfens 2a. Es sind Schnittlinien II-II und III-III dargestellt, die auf die Figuren 2 und 3 verweisen.

Figur 2 zeigt ein Kugelgelenk 1 im Querschnitt. Das Gehäuse 2 weist eine kugelförmige Außenfläche auf, an der eine Nut 24 zur Einbauorientierung ausgebildet ist. Die Gelenkkugel 3 ist im Innenraum des Gehäuses 2 angeordnet. Die Gelenkkugel 3 ist als Teil eines in Figur 1 dargestellten Kugelzapfens 2a ausgebildet. Die Kugelschale 4 ist in radialer Richtung zwischen der Gelenkkugel 3 und dem Gehäuse 2 angeordnet. Die Gelenkkugel 3 weist eine sphärisch ausgebildete Kugeloberfläche 5 auf. Im Gegensatz dazu weist das Gehäuse 2 eine davon abweichende Gehäuseinnenfläche 6 auf, die im Folgenden noch näher beschrieben wird. Die Kugelschale 4 liegt an ihrer Außenfläche 7 bündig an der Gehäuseinnenfläche 6 an. Des Weiteren liegt die Kugelschale 4 mit ihrer Innenfläche 8 derart an der Kugeloberfläche 5 an, dass die Gelenkkugel 3 gleitbeweglich von der Kugelschale 4 aufgenommen ist. Mögliche Schmiernuten sind nicht dargestellt.

Das Kugelgelenk 1 weist eine Hauptbelastungsachse 9 und eine zu dieser orthogonal ausgerichtete Querachse 10 auf. Des Weiteren weist das Kugelgelenk eine Hochachse 2a auf, die mit der Längsachse des Gehäuses übereinstimmt. Die Hauptbelastungsachse 9 ist derart definiert, dass in ihrer Richtung eine äußere Kraft 11 auf das Kugelgelenk 1 einwirkt. Die Kugelschale 4 ist derart elastisch ausgebildet, dass sich die Gelenkkugel 3 bei dieser Krafteinwirkung relativ zum Gehäuse 2 verschiebt.

Aus dem Stand der Technik bekannte Kugelschalen 4 weisen eine in Umfangsrichtung konstante radiale Dicke auf. Dies hat jedoch den Nachteil, dass die Kugelschale 4 von der im Wesentlichen punktuell bzw. lokal angreifenden Kraft 11 im Bereich der Hauptbelastungsachse 9 sehr stark und in den von der Hauptbelastungsachse 9 beabstandeten Bereichen eher weniger stark belastet wird. Infolgedessen kann im Bereich der Hauptbelastungsachse 9 eine Überbelastung der Kugelschale 4 auftreten.

Zur Vermeidung dieses Problems weist die Kugelschale 4 gemäß Figur 2 in der dort dargestellten Querschnittsansicht eine sich derart in Umfangsrichtung verändernde radiale Dicke auf, dass sich die einwirkende Kraft 11 in Umfangsrichtung gleichmäßig auf einen größeren Bereich der Kugelschale 4 verteilt. Hierfür ist die Kugelschale 4 im Querschnitt im Bereich der Hauptbelastungsachse 9 etwas doppelt so dicke ausgebildet als im Bereich der Querachse 10. Gemäß dem in Figur 2 dargestellten konkreten Ausführungsbeispiel der Kugelschale 4 weist diese eine in dieser Ebene elliptisch ausgebildete Außenkontur 12 auf. Das Gehäuse 2 weist eine Gehäuseinnenkontur 23 und/oder Gehäuseinnenfläche 6 auf, die als Negativform der Außenkontur 12 und/oder Außenfläche 7 der Kugelschale 4 ausgebildet sind. Die Begrifflichkeit "Kontur" bezeichnet hierbei eine sich gemäß der in Figur 2 dargestellten Schnittansicht zweidimensional erstreckende Form, wohingegen die Begrifflichkeit "Fläche" im Folgenden für dreidimensionale Formen verwendet wird.

Gemäß Figur 2 nimmt die radiale Dicke der Kugelschale 4, bei Betrachtung lediglich einer der beiden Teilsegmente, in Umfangsrichtung von der Hauptbelastungsachse 9 ausgehend in Richtung der Querachse 10 über einen Winkelbereich 13 stetig ab. Der Winkelbereich 13 beträgt im vorliegenden Ausführungsbeispiel im Wesentlichen 60°, wobei auch Winkelbereiche zwischen 30° und 80°den kbar wären. Durch die elliptische Form der Außenkontur 12 der Kugelschale 4 wird die im Wesentlichen punktuell bzw. lokal angreifende Kraft 11 im Winkelbereich 13 zu beiden Seiten der Hauptbelastungsachse 9 im Wesentlichen gleichmäßig verteilt, so dass Überbelastungen der Kugelschale 4 vermieden werden. Die auf den Umfangs- und/oder Flächenbereich der Kugelschale 4 aufgeteilte Kraft 14 ist in der Figur 2 mit im Vergleich zur Kraft 11 kleineren, zueinander gleichlangen Pfeilen angedeutet.

Figur 3 zeigt eine schematische Schnittdarstellung der Kugelschale 4 in einer Teilsegmentansicht. Wie bereits vorstehend erläutert, ist das entscheidende, dass die Kugelschale 4 in demjenigen Bereich, indem die Kraft 11 eingeleitet wird (vergl. Figur 2), eine größere radiale Dicke aufweist als in den beidseitig von der Hauptbelastungsachse 9 beabstandeten Bereichen.

Gemäß einem in Figur 3 dargestellten ersten Ausführungsbeispiel der Kugelschale 4 kann eine optimale Verteilung der Kraft 11 auf die Kugelschale 4 dadurch bewirkt werden, wenn sich die Kugelschale 4 bzw. deren Außenkontur 12a im Querschnitt in der hier dargestellten Halbsegmentansicht aus einem ersten Teilkreis 15 und einem zweiten Teilkreis 16 zusammensetzt. Hierbei ist der Mittelpunkt 17 des ersten Teilkreises 15 zum Kugelmittelpunkt 18 versetzt exzentrisch angeordnet. Des Weiteren liegt der Mittelpunkt 17 des ersten Halbkreises 15 auf der Hauptbelastungsachse 9. Zur optimalen Radialdickenanpassung ist der Radius des ersten Halbkreises 15 gleich dem Kugelradius ausgebildet.

Im Gegensatz dazu ist der Mittelpunkt 19 des zweiten Teilkreises 16 konzentrisch zum bzw. auf dem Kugelmittelpunkt 18 angeordnet. Der Radius des zweiten Teilkreises 16 ist jedoch größer als der Kugelradius ausgebildet. Die beiden Teilkreise 15, 16 schneiden sich jeweils in der vorliegend dargestellten Halbsegmentdarstellung in einem ersten und zweiten Schnittpunkt 20, 21 und bilden so die Außenkontur 12a aus. Vorzugsweise sind diese beiden Schnittpunkte 20, 21 jeweils ausgehend von der Hauptbelastungsachse 9 in Richtung der Querachse 10 am Ende des jeweiligen Winkelbereiches 13 - von denen vorliegend nur einer eingezeichnet ist - ausgebildet. Eine derartige, aus dem ersten und zweiten Teilkreis 15, 16 zusammengesetzte, Außenkontur 12a bewirkt eine sehr gute Verteilung der Kraft 11 über den Winkelbereich 13. Die Außenkontur ist hier allerdings konstruiert dargestellt.

Gemäß einem, ebenfalls in Figur 3 dargestellten, alternativen zweiten Ausführungsbeispiel der Kreisschale 4 weist deren Außenkontur 12b eine elliptische Form auf. Diese elliptische Außenkontur 12b ist an das erste Ausführungsbeispiel Außenkontur 12a angenähert. Aufgrund der elliptischen Form kann jedoch die Außenkontur 12b der Kugelschale 4 leichter hergestellt werden, wobei nur geringe Einbußen in Bezug auf die Kraftverteilung hingenommen werden müssen. Der Schnittpunkt 21 ist mit anderen Worten bei der Herstellung der Kugelschale auf die Außenkontur 12b verschoben, so dass sich ein insgesamt homogener Verlauf der Außenkontur ergibt.

Die in den Figuren 2 und 3 dargestellte elliptische Außenkontur 12 der Kugelschale 4 bildet bei dreidimensionaler Betrachtung die Außenfläche 7 der Kugelschale 4 aus. Diese Außenfläche 7 kann in einem hier nicht dargestellten Ausführungsbeispiel als Ellipsoid oder als Zylinder mit elliptischer Grundfläche ausgebildet sein. Hierdurch kann im Falle des Ellipsoids die Kraftverteilung nicht nur zweidimensional in Umfangsrichtung sondern dreidimensional auf eine entsprechende Kraftaufnahmefläche der Kugelschale 4 verteilt werden. Es ist vorteilhaft den dreidimensionalen Hohlraum des Gehäuses bzw. die Innenkontur derart auszuführen, dass der bodenseitige Halbraum als Ellipsoid und der Halbraum zur Gehäuseöffnung hin als Zylinder mit elliptischer Grundfläche ausgebildet ist. Diese Form ist günstig mittels Kaltumformen herstellbar.

Die vorliegende Erfindung ist nicht auf das dargestellte und beschriebene Ausführungsbeispiel beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichen

- 1.: Kugelgelenk
- 2.: Gehäuse
- 2a: Längsachse, Hochachse
- 3.: Gelenkkugel
- 4.: Kugelschale
- 5.: Kugeloberfläche
- 6.: Gehäuseinnenfläche
- 7.: Außenfläche der Kugelschale
- 8.: Innenfläche der Kugelschale
- 9.: Hauptbelastungsachse, Hauptbelastungsrichtung
- 10.: Querachse
- 11.: Kraft
- 12, 12a, 12b: Außenkontur der Kugelschale
- 13.: Winkelbereich
- 14.: Aufgeteilte Kraft
- 15.: Erster Teilkreis
- 16.: Zweiter Teilkreis
- 17.: Mittelpunkt des ersten Teilkreises
- 18.: Kugelmittelpunkt
- 19.: Mittelpunkt des zweiten Teilkreises
- 20.: Erster Schnittpunkt
- 21.: Zweiter Schnittpunkt
- 22.: Innenkontur Kugelschale
- 23.: Gehäuseinnenkontur
- 24.: Nut

## Patentansprüche

1. Kugelgelenk mit
einem Gehäuse (2),
einer im Innenraum des Gehäuses (2) angeordneten und Teil eines Kugelzapfens (3a) Gelenkkugel (3) und einer zwischen diesen beiden angeordneten Kugelschale (4), die an ihrer Außenfläche (7) an der Gehäuseinnenfläche (6) und an ihrer Innenfläche (8) an der Kugeloberfläche (5) anliegt,
wobei die Kugelschale (4) die Gelenkkugel (3) gleitbeweglich aufnimmt und derart elastisch ausgebildet ist, dass sich die Gelenkkugel (3) bei einer auf das Kugelgelenk (1) einwirkenden Kraft (11) gegenüber dem Gehäuse (2) verschieben kann, und wobei die Kugelschale (4) in einer durch den Kugelmittelpunkt (18) verlaufenden Querschnittsebene senkrecht zu einer Hochachse, die mit einer Längsachse des Gehäuses (2) übereinstimmt, wobei die Längsachse auf der Längs- und Symmetrieachse des Kugelzapfens (3a) in einem nicht ausgelenkten Zustand des Kugelgelenks liegt, eine kreisrunde Innenkontur (22) und eine derart ausgebildete Außenkontur (12) aufweist, dass die Kugelschale (4) in der Querschnittsebene im Bereich einer Hauptbelastungsachse (9) dicker ausgebildet ist als im Bereich einer zu dieser orthogonalen Querachse (10), wobei die Querachse (10) die Außenkontur (12) in ein erstes und zweites Teilsegment unterteilt,
**dadurch gekennzeichnet, dass** die Außenkontur (12) der Kugelschale (4) in zumindest einem ihrer beiden Teilsegmente aus einem ersten und einem zweiten Teilkreis (15; 16) gebildet ist, die sich in zwei zur Hauptbelastungsachse (9) symmetrischen Schnittpunkten (20,21) schneiden,
wobei der Mittelpunkt (17) des ersten Teilkreises (15) zum Kugelmittelpunkt (18) exzentrisch, auf der Hauptbelastungsachse (9) liegend angeordnet ist und der Radius des ersten Teilkreises (15) dem Kugelradius entspricht und
der Mittelpunkt des zweiten Teilkreises (16) zum Kugelmittelpunkt (18) konzentrisch angeordnet ist und der Radius des zweiten Teilkreises (16) größer als der Kugelradius ausgebildet ist, so dass die Kugelschale (4) zumindest in der Querschnittsebene eine sich derart in Umfangsrichtung verändernde radiale Dicke aufweist, dass sich eine koaxial zur Hauptbelastungsachse (9) einwirkende Kraft (11) in Umfangsrichtung über einen Winkelbereich (13) gleichmäßig auf die Kugelschale (4) verteilt.

2. Kugelgelenk nach dem vorherigen Anspruch, **dadurch gekennzeichnet, dass** die radiale Dicke der Kugelschale (4) in zumindest einem ihrer beiden durch die Querachse (10) gebildeten Teilsegmente in Umfangsrichtung von der Hauptbelastungsachse (9) ausgehend in Richtung der Querachse (10) zumindest in dem Winkelbereich (13) kontinuierlich abnimmt.

3. Kugelgelenk nach einem oder mehreren der vorherigen Ansprüche, **dadurch gekennzeichnet, dass** der Winkelbereich (13) zwischen 30°und 80°, vorzugsweise 60°, beträgt.

4. Kugelgelenk nach einem oder mehreren der vorherigen Ansprüche, **dadurch gekennzeichnet, dass** die Konturen der beiden Teilkreise (15, 16) in ihren beiden Übergangsbereichen aneinander angenähert sind, so dass diese vorzugsweise tangential ineinander übergehen, und/oder dass die Außenkontur (12b) der Kugelschale (4) im Querschnitt in zumindest einem ihrer beiden Teilsegmente zumindest als Teil eines, insbesondere zum Kugelmittelpunkt (18) konzentrischen, Ovals ausgebildet ist, wobei vorzugsweise die Hauptbelastungsachse (9) die Hauptachse des Ovals bildet.

5. Kugelgelenk nach einem oder mehreren der vorherigen Ansprüche, **dadurch gekennzeichnet, dass** die Außenfläche (7) der Kugelschale (4) in zumindest einem ihrer beiden Teilsegmente als zumindest Teil eines Ovoides ausgebildet ist.

6. Kugelgelenk nach einem oder mehreren der vorherigen Ansprüche, **dadurch gekennzeichnet, dass** die Gehäuseinnenkontur (23) und/oder die Gehäuseinnenfläche (6) der Negativform der Außenkontur (12) und/oder der Außenfläche (7) der Kugelschale (4) entspricht.

7. Kugelgelenk nach einem oder mehreren der vorherigen Ansprüche, **dadurch gekennzeichnet, dass** die Dicke der Kugelschale (4) zwischen einem Bereich von 1 mm bis 3 mm variiert.

8. Kugelgelenk nach einem oder mehreren der vorherigen Ansprüche, **dadurch gekennzeichnet, dass** das Gehäuse (2) eine Außenfläche aufweist, an der eine Nut (24) oder Abflachung zur Einbauorientierung ausgebildet ist.

9. Verfahren zur Herstellung eines Kugelgelenks nach einem der vorherigen Ansprüche 1 bis 12, **dadurch gekennzeichnet, dass** das Gehäuse (2) und seine, insbesondere ovale, Gehäuseinnenkontur (23) durch ein einstufiges oder mehrstufiges Kaltumformverfahren erstellt wird.

10. Verfahren zur Herstellung eines Kugelgelenks nach Anspruch 9, **dadurch gekennzeichnet, dass** die Gehäuseinnenkontur (23) ausschließlich ohne spanende Bearbeitung erstellt wird.

## Claims

1. Ball joint having a housing (2),
a joint ball (3) arranged in the interior of the housing (2) and part of a ball pin (3a), and
a ball shell (4), which is arranged between these two and which, on its outer surface (7), bears on the housing inner surface (6) and, on its inner surface (8), bears on the ball surface (5),
the ball shell (4) accommodating the joint ball (3) in a sliding manner and being formed elastically in such a way that, when there is a force (11) acting on the ball joint (1), the joint ball (3) can be displaced with respect to the housing (2), and
in a cross-sectional plane extending through the ball centre (18) at right angles to a vertical axis which coincides with the longitudinal axis of the housing (2), the longitudinal axis lying on the longitudinal axis and axis of symmetry of the ball pin (3a) when the ball joint is not deflected, the ball shell (4) having a circular inner contour (22) and an outer contour (12) formed in such a way that the ball shell (4) is formed to be thicker in the cross-sectional plane in the area of a main loading axis (9) than in the area of a transverse axis (10) orthogonal thereto, the transverse axis (10) dividing the outer contour (12) into a first and second part segment, **characterized in that**
in at least one of its two part segments, the outer contour (12) of the ball shell (4) is formed from a first and a second part circle (15; 16), which intersect at two points of intersection (20, 21) that are symmetrical with respect to the main loading axis (9),
wherein the centre (17) of the first part circle (15) is arranged eccentrically with respect to the ball centre (18), lying on the main loading axis (9), and the radius of the first part circle (15) corresponds to the ball radius, and
the centre of the second part circle (16) is arranged concentrically with respect to the ball centre (18), and the radius of the second part circle (16) is formed so as to be greater than the ball radius,
so that, at least in the cross-sectional plane, the ball shell (4) has a radial thickness that changes in the circumferential direction in such a way that a force (11) acting coaxially with respect to the main loading axis (9) is distributed to the ball shell (4) uniformly in the circumferential direction over an angular range (13).

2. Ball joint according to the preceding claim, **characterized in that** in at least one of its two partial segments formed by the transverse axis (10), the radial thickness of the ball shell (4) in the circumferential direction, starting from the main loading axis (9), decreases continuously in the direction of the transverse axis (10), at least in the angular range (13).

3. Ball joint according to one or more of the preceding claims, **characterized in that** the angular range (13) is between 30° and 80°, preferably 60°.

4. Ball joint according to one or more of the preceding claims, **characterized in that** the contours of the two part circles (15, 16) are brought close to each other in their two transition regions, so that these preferably merge tangentially into one another, and/or **in that** the outer contour (12b) of the ball shell (4), in cross section in at least one of its two part segments, is formed at least as part of an oval, in particular concentric with the ball centre (18), wherein the main loading axis (9) preferably forms the main axis of the oval.

5. Ball joint according to one or more of the preceding claims, **characterized in that** in at least one of its two part segments, the outer surface (7) of the ball shell (4) is formed as at least part of an ovoid.

6. Ball joint according to one or more of the preceding claims, **characterized in that** the inner housing contour (23) and/or the inner housing surface (6) corresponds to the negative shape of the outer contour (12) and/or the outer surface (7) of the ball shell (4).

7. Ball joint according to one or more of the preceding claims, **characterized in that** the thickness of the ball shell (4) varies within a range from 1 mm to 3 mm.

8. Ball joint according to one or more of the preceding claims, **characterized in that** the housing (2) has an outer surface on which a groove (24) or flattened portion is formed for installation orientation.

9. Method for producing a ball joint according to one of the preceding Claims 1 to 12, **characterized in that** the housing (2) and its in particular oval inner housing contour (23) is produced by a single-stage or multi-stage cold-forming method.

10. Method for producing a ball joint according to Claim 9, **characterized in that** the inner housing contour (23) is produced exclusively without material-removing machining.

## Revendications

1. Articulation sphérique avec un boîtier (2), une rotule (3) disposée dans l'espace intérieur du boîtier (2) et faisant partie d'un tourillon à boulet (3a), et un coussinet sphérique (4) disposé entre ces deux pièces, qui s'applique par sa face extérieure (7) sur la face intérieure du boîtier (6) et par sa face intérieure (8) sur la surface de la rotule (5), dans laquelle le coussinet sphérique (4) contient la rotule (3) en mouvement glissant et est réalisé sous forme élastique, de telle manière que la rotule (3) puisse se déplacer par rapport au boîtier (2) sous l'action d'une force (11) agissant sur l'articulation sphérique (1), et dans laquelle le coussinet sphérique (4) présente dans un plan de section transversale passant par le centre (18) de la rotule et perpendiculaire à un axe vertical, qui coïncide avec un axe longitudinal du boîtier (2), dans lequel l'axe longitudinal se situe sur l'axe longitudinal et de symétrie du tourillon à boulet (3a) dans un état non dévié de l'articulation sphérique, un contour intérieur circulaire (22) et un contour extérieur (12) configuré de telle manière que le coussinet sphérique (4) soit, dans le plan de section transversale, plus épais dans la région d'un axe de charge principal (9) que dans la région d'un axe transversal (10) orthogonal à celui-ci, dans lequel l'axe transversal (10) divise le contour extérieur (12) en un premier et un deuxième segments partiels, **caractérisée en ce que** le contour extérieur (12) du coussinet sphérique (4) est formé dans au moins un de ses deux segments partiels par un premier et un deuxième cercles partiels (15; 16), qui se coupent en deux points d'intersection (20, 21) symétriques par rapport à l'axe de charge principal (9), dans laquelle le centre (17) du premier cercle partiel (15) est excentrique par rapport au centre (18) de la rotule, est situé sur l'axe de charge principal (9) et le rayon du premier cercle partiel (15) correspond au rayon de la rotule, et le centre du deuxième cercle partiel (16) est disposé de façon concentrique par rapport au centre (18) de la rotule et le rayon du deuxième cercle partiel (16) est plus grand que le rayon de la rotule, de telle manière que le coussinet sphérique (4) présente, au moins dans le plan de section transversale, une épaisseur radiale variant dans la direction périphérique de telle manière qu'une force (11) agissant coaxialement à l'axe de charge principal (9) se répartisse uniformément sur le coussinet sphérique (4) sur une zone angulaire (13) dans la direction périphérique.

2. Articulation sphérique selon la revendication précédente, **caractérisée en ce que** l'épaisseur radiale du coussinet sphérique (4) diminue de façon continue, dans au moins un de ses deux segments partiels formés par l'axe transversal (10), en direction périphérique depuis l'axe de charge principal (9) en direction de l'axe transversal (10) au moins dans la zone angulaire (13).

3. Articulation sphérique selon une ou plusieurs des revendications précédentes, **caractérisée en ce que** la zone angulaire (13) vaut entre 30° et 80°, de préférence 60°.

4. Articulation sphérique selon une ou plusieurs des revendications précédentes, **caractérisée en ce que** les contours des deux cercles partiels (15, 16) s'approchent l'un de l'autre dans leurs deux zones de transition, de telle manière que ceux-ci se prolongent de préférence tangentiellement l'un dans l'autre, et/ou **en ce que** le contour (12b) du coussinet sphérique (4) est configuré en section transversale dans au moins un de ses deux segments partiels au moins comme partie d'un ovale, de préférence concentrique au centre (18) de la rotule, dans laquelle l'axe de charge principal (9) forme de préférence l'axe principal de l'ovale.

5. Articulation sphérique selon une ou plusieurs des revendications précédentes, **caractérisée en ce que** la face extérieure (7) du coussinet sphérique (4) forme au moins une partie d'un ovoïde dans au moins un de ses deux segments partiels.

6. Articulation sphérique selon une ou plusieurs des revendications précédentes, **caractérisée en ce que** le contour intérieur du boîtier (23) et/ou la face intérieure du boîtier (6) correspond à la forme négative du contour extérieur (12) et/ou de la face extérieure (7) du coussinet sphérique (4).

7. Articulation sphérique selon une ou plusieurs des revendications précédentes, **caractérisée en ce que** l'épaisseur du coussinet sphérique (4) varie dans une plage comprise entre 1 mm et 3 mm.

8. Articulation sphérique selon une ou plusieurs des revendications précédentes, **caractérisée en ce que** le boîtier (2) présente une face extérieure, sur laquelle une rainure (24) ou un méplat est formé (e) en vue de l'orientation au montage.

9. Procédé de fabrication d'une articulation sphérique selon l'une quelconque des revendications précédentes 1 à 12, **caractérisé en ce que** l'on réalise le boîtier (2) et son contour intérieur de boîtier (23), en particulier ovale, par un procédé de déformation à froid en une étape ou en plusieurs étapes.

10. Procédé de fabrication d'une articulation sphérique selon la revendication 9, **caractérisé en ce que** l'on réalise le contour intérieur du boîtier (23) exclusivement par un usinage sans enlèvement de copeaux.
